# EUROPEAN PATENT SPECIFICATION

(11) **EP 3 219 201 B1**
(45) Date of publication and mention of the grant of the patent: **24.10.2018**
(21) Application number: 17161720.2
(22) Date of filing: 17.03.2017
(51) Int. Cl.: A01K 1/00

(54) **A VENTILATION SYSTEM FOR A LIVESTOCK PRODUCTION BUILDING, A DUCT ARRANGEMENT AND METHOD FOR SUPPLYING FRESH AIR INTO A ROOM**
BELÜFTUNGSSYSTEM FÜR EIN TIERPRODUKTIONSGEBÄUDE, KANALANORDNUNG UND VERFAHREN ZUR ZUFÜHRUNG VON FRISCHLUFT IN EINEN RAUM
SYSTÈME DE VENTILATION POUR UN BÂTIMENT DE PRODUCTION DE BÉTAIL, AGENCEMENT DE CONDUIT ET PROCÉDÉ POUR FOURNIR DE L'AIR FRAIS DANS UNE PIÈCE

(30) Priority: 18.03.2016 NL 2016460
(43) Date of publication of application: 20.09.2017
(73) Proprietor: Van de Glind, Marinus Willem, 3772 TM Barneveld (NL)
(72) Inventor: Van de Glind, Marinus Willem, 3772 TM Barneveld (NL)
(74) Representative: de Hoog, Johannes Hendrik

(56) References cited:
- EP-A1- 1 389 420
- DE-A1- 19 822 806
- FR-A1- 2 713 317
- US-A- 4 249 461
- US-A1- 2016 037 743

## Description

### TECHNICAL FIELD

The invention relates to a ventilation system, more particularly to a ventilation system for a livestock production building. The invention further relates to duct arrangement and a method for supplying fresh air into a room.

### BACKGROUND

The optimum feeding and finishing conditions for livestock, and particularly hogs and pigs, are a function of the total environment in which they live. Therefore, proper temperature and ventilation control are important to their growth, health and welfare. These same conditions are necessary to provide a comfortable and healthy working environment for the animal caretakers.

Additionally, it is important to provide cooling air to reduce or prevent temperature stress on the livestock. However, it is also important to avoid dramatic temperature changes which may in itself cause temperature shock or stress to the livestock. Therefore, as well as controlling the rate, velocity and direction it is important to facilitate the tempering of cooler intake air before it comes into contact with the livestock. During periods of hot weather, the combination of air temperature and the heat produced by the livestock requires a substantial volume of cooling air. The optimal ambient condition depends on the number, type and age of the livestock in the building; for example, younger and smaller pigs require less cooling air because they put off less body heat and are not as closely confined.

Little cooling air is required during cold weather. Nevertheless minimal ventilation is still required to remove moisture and for the health of the livestock and the workers. Under cold weather conditions a minimum fresh air supply is required but the temperature of the fresh air must be controlled to prevent temperature shock to the livestock. This fresh air must also be evenly distributed throughout the pig space.

Moreover, if the environment in which animals are raised has favourable conditions, such as temperature and ventilation, the amount of feed necessary to produce livestock yielding a given amount of meat is reduced and efficiency of the livestock production operation is increased.

Current livestock ventilation apparatus have many inadequacies primarily due to the fact that ventilation apparatus merely draw a ventilating air flow through the buildings. Such apparatus failed to properly control the air flow velocity, rate and distribution of the incoming fresh air.

US2016/0037743A1 discloses a livestock ventilation system with pit ventilation through a slatted floor using an exhaust fan. A duct system is provided for providing air distribution from fresh air supply to a containment room. The fresh air supply is an attic above the room and a manifold area between the rooms. The duct system includes a ventilation duct with runs the length of the room. The air flows into the room through the air duct and air is distributed over the livestock in containment room before passing through the slatted floor and being pulled out through the pit by an exhaust fan. The ventilation duct includes a lower air passage in fluid communication with the manifold area and an upper air passage in fluid communication with the attic. Openings are evenly distributed along the outer wall of the lower air passage to evenly distribute at least a minimum, or baseline, flow of air through the room. A ventilation slide disposed between the fresh air supply and the room is provided to control the air flow from the manifold into the lower air passage. Upper air passage is used to bring additional low of air from attic to the containment area. The maximum additional flow depends on a fixed gap defined by spacers. Ventilation slides control the amount of air passing from the attic to the upper air passage.

US2002/007801A1 discloses a livestock ventilation system with more than two air passages with varying flow potential in each passage. The overall size of the air duct may vary to accommodate variations in room size and ventilation requirements. A ventilation slides control the amount of air flowing into each of the passages.

A disadvantage of the known systems is that slides have to be moved mechanically to obtain a good distribution of fresh air flowing into the room. The mechanical parts make the ventilation system susceptible to malfunctions.

In other livestock buildings a ventilation ceiling is provided to provide an even distribution of fresh air into the room. EP1389420 A1 discloses such a ceiling. The ceiling comprises an upper panel and a lower panel with air outlets. Spring-loaded plates fit over the outlets of the upper panel and act as non-return valve. However such ventilation ceiling is relative expensive and needs regularly to be cleaned.

### SUMMARY

It is an object of the invention to provide an improved ventilation system which is less expensive, easy to install, less susceptible to malfunctions of mechanical parts, does not need moving valve or slides to control the air flow and which provides an evenly distribution of fresh air over a room ranging from 5% up to 100% of the maximum ventilation flow rate (m³/h).

According to the invention, this object is achieved by a ventilation system having the features of Claim 1. Advantageous embodiments may be attained by the measures mentioned in the dependent claims.

According to a first aspect of the invention, there is provided ventilation system according to claim 1 for a livestock production building comprising an exhaust fan which draws air from a room and a room duct for supplying fresh air into the room. The room duct comprises a ventilation passage and an air supply passage. The air supply passage extends parallel to the ventilation passage. An inlet is disposed between a fresh air supply and the ventilation passage. The room duct comprises an exterior wall with openings for distributing evenly fresh air from the ventilation passage over the room. A separation wall comprising openings for passing air from the air supply passage to the ventilation passage separates the ventilation passage from the air supply passage. The ventilation system further comprises a fresh air supply fan for supplying an air flow rate of fresh air through the air supply passage.

The basic idea of the present disclosure is based on the following concept. To obtain an even distribution of fresh air flowing out of an air duct the air flow rate should be between a minimum air flow rate and maximum air flow rate through the air duct. In a livestock the volume of fresh air/exhaust air depends on the age of the livestock, the desired temperature in the room, the amount of livestock and the size of the room. For example, the flow rate varies from 300m³/h (5%) to 6000m³/h (100%). It is impossible to dimension one air channel for such a range wherein the air flow is always above a required minimum air flow and below a required maximum air flow to provide an evenly distribution of air coming out of the room duct. The exhaust fan creates a negative pressure within the room. The atmospheric pressure in the attic is higher than the pressure in the room. As a consequence air is flowing from the attic to the room and is distributed over the room by the ventilation passage. The fresh air supply fan generates a positive pressure in the air supply passage and a flow rate suitable to have an evenly distribution of fresh air coming out of the air supply passage due to the pressure difference in the air passage and the ventilation passage. Consequently, the fresh air passage ensures an even supply of a predefined volume of fresh air to the ventilation passage over its whole length. In this way, if the exhaust flow rate is smaller than the flow rate generated by the air supply fan, the air supply passage provides an even supply of fresh air to the ventilation passage over the whole length of the ventilation passage. The amount of supplied fresh air higher than the amount of extracted exhaust air flows via the inlet from the ventilation duct to the attic for use in other rooms of the livestock building.

In an embodiment, the air supply passage is disposed in the ventilation passage. Thus the air supply passage is entirely surrounded by the ventilation passage. This feature has the advantage that all air supplied via the air supply passage cannot flow directly into to room but has to flow first into the ventilation passage. Another advantage of this feature is that plastic film tubes could be used for both the ventilation duct and the air supply duct. This reduces the costs of the ventilation system. In an alternative embodiment, the air supply passage is next to the ventilation passage. This feature allows making the room duct from metal or plastic sheets. The room duct can be attached to the ceiling or the walls the room.

In a further embodiment, the system further comprises a heater to heat up the air flow generated by the fresh air supply fan. In a specific embodiment the heater is a heat exchanger configured to transfer heat from an exhaust flow to the flow generated by the air supply fan.

Also disclosed but not claimed, a duct arrangement is provided for distributing evenly over a room having the technical features of room duct described above.

According to a second aspect, a method according to claim 9 for supplying fresh air into a room is provided The method uses the room duct described above. An exhaust fan draws air from the room. A fresh air flow generated by an additional fan is supplied to the air supply passage of the room duct.

Other features and advantages will become apparent from the following detailed description, taken in conjunction with the accompanying drawings which illustrate, by way of example, various features of embodiments.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 illustrates a cross sectional view of a first embodiment of a livestock production building;
Fig. 2 is a section side elevation view of a first embodiment of a room duct in accordance with the present disclosure;
Fig. 3 is a section side elevation view of a second embodiment of a room duct in accordance with the present disclosure;
Fig. 4 is a top plan view of a livestock production building illustrating containment rooms provided with a room duct; and,
Fig. 5 is a sectional view of a second embodiment of a livestock production building.

### DETAILED DESCRIPTION

The embodiments described herein are not intended to limit the scope of the invention to the precise form disclosed. Rather the embodiments have been chosen and described to explain the principles of the invention and its applications and practical use to best enable others skilled in the art to follow its teachings.

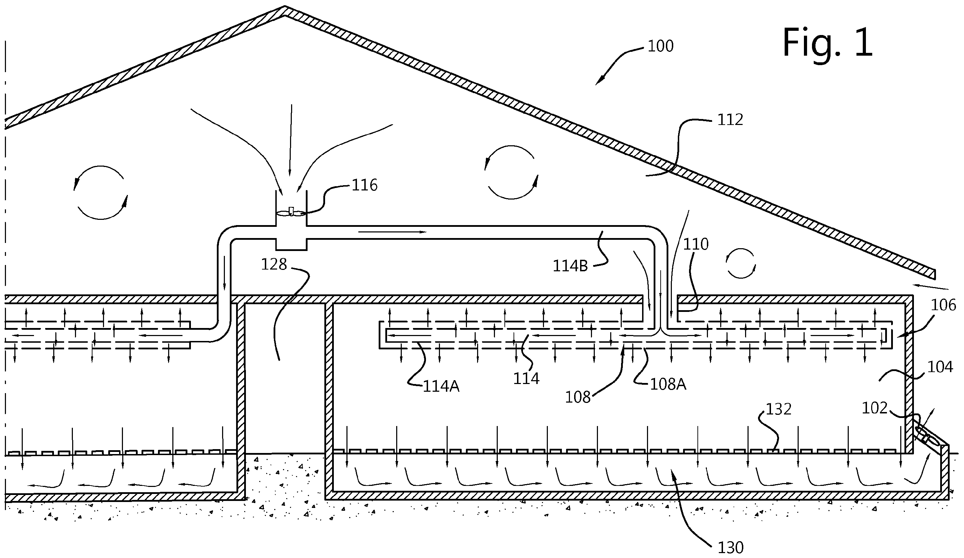

Fig. 1 illustrates a cross sectional view of a first embodiment of a livestock production building 100. The air flow pattern through the building is shown during in maximum ventilation mode. Livestock production building 100 includes attic 112, containment area or room 104, manifold area 128, pit 130 and an exhaust fan 102. The building further comprises in each room a room duct 106 and air supply fan 116.

The room duct 106 comprises ventilation passage 108 and air supply passage 114. Both, the ventilation passage 108 and the air supply passage 114 have an elongated channel structure. The room duct 106 further comprises inlet 110 disposed between the attic, which is regarded a fresh air supply, and the ventilation passage 108. Ventilation passage 108 is in fluid communication with attic 112 by means of inlet 110. The ventilation passage is in fluid communication with the space in the room by means of openings in external wall 108A of the room duct. Air supply passage 114 extends parallel to ventilation passage 108. Via openings of separation wall 114a the air supply passage is in fluid communication with the ventilation passage. The openings are distributed such along the separation wall that given a predefined airflow supplied to the air supply passage by air supply fan 116 the air flow is evenly distributed over the whole length of the separation wall.

The ventilation system in the livestock production building functions as follows. Exhaust fan 102 draws air from room 104. The air flows from the room through slatted floor 132 into pit 130 and through the pit to the exhaust fan. The air is exhausted to the outside through exhaust fan 102. In this way a relative low pressure is in the room that draws air from the ventilation passage 108 through the openings in the external wall of the room duct.

Air supply fan 116 generates a predefined air flow supplied to air supply passage 114 of the room duct. The relative high pressure in the air supply passage pushes the air through the openings in separation wall 114A into the ventilation passage.

In Fig. 1 is shown that one air supply fan 116 is used to supply air taken from attic 112 to the air supply passage of two different room ducts 106. It might also be possible that for each room duct a supply fan is provided. Furthermore, fig. 1 shows two different embodiments of room ducts. In the left room, the air supply passage is coupled at an end of the room duct to an air supply duct 114B which supplies the air flow generated by the air supply fan 116. In the right room 104, the air supply duct 114B is coupled to the air supply passage somewhere in the middle of the air supply passage 108. It might also be possible that the air supply passage is coupled at both ends to an air supply duct.

In case the air flow generated by air supply fan 116 is smaller than the air flow drawn from the room by the exhaust fan, an air flow passes the inlet 110 from attic 112 into the ventilation passage 108 of the room duct. In case the air flow generated by air supply fan 116 is larger than the air flow drawn from the room by the exhaust fan, an air flow passes the inlet 110 from ventilation passage 108 of the room duct into attic 112. The air flow supplied via the openings in separation wall 114A is distributed evenly over the length of the ventilation passage. In this way, at low exhaust flow rates, the pressure in the ventilation passages is increased equally over its entire length by the air flow generated by the air supply fan. Consequently the room duct distributes the fresh air evenly over the room. At high exhaust flow rates, the pressure difference between air in attic 112 and room 104 increases as a result of which the ventilation passage is capable to draw sufficient air from the attic to distribute evenly both the air flow generated by the air supply fan and the air flow drawn from the attic over the room.

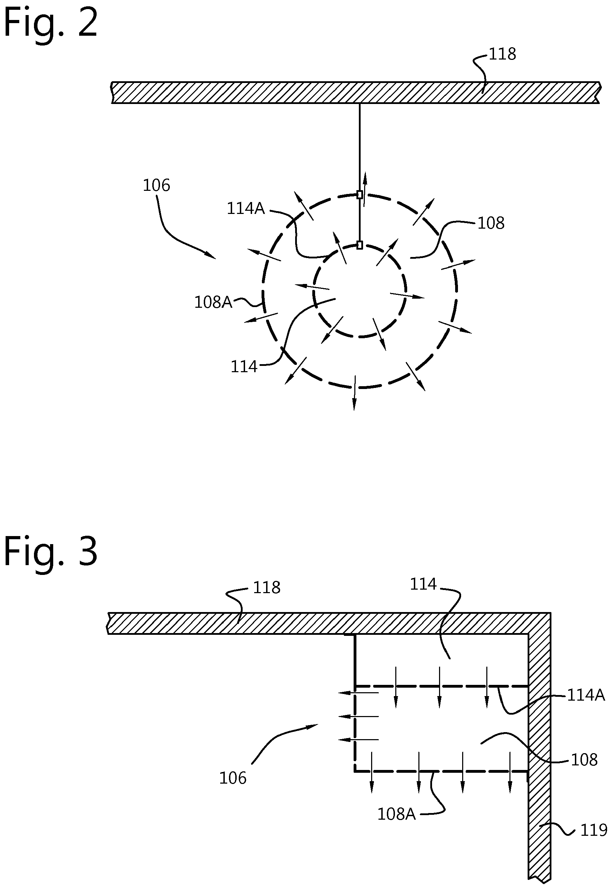

Fig. 2 is a section side elevation view of a first embodiment of a room duct in accordance with the present disclosure. In the first embodiment, the room duct comprises a first tubular duct 108A and a smaller second tubular duct 114A. The first tubular duct is the external wall 108A of the room duct. The second tubular duct is the separation wall between the ventilation passage 108 and the air supply passage 114. The air supply passage 114 is the space in the second tubular duct. The ventilation passage is the space between the first tubular duct and the second tubular duct. Fig. 2 further shows the flow direction of air through openings of the first tubular duct and second tubular duct. The first tubular duct and the second tubular duct could be made from any suitable material such as metal, plastic and even plastic film tubes. The ducts are attached to the ceiling by attaching means such as wires or supports commonly known to the skilled person.

In an embodiment, for supplying fresh air to a room with a rate in the range 300m³/h - 6000m³/h, the first tubular tube has a diameter of about 630mm and the second tubular tube has a diameter in the range 250mm - 300mm and the fresh air supply fan generates an air flow through the air supply passage into the ventilation passage in the range of 1000-1200m³/h.

Fig. 3 is a section side elevation view of a second embodiment of a room duct in accordance with the present disclosure. In this embodiment, the room duct is made from sheet material. The room duct comprises an upper air supply passage 114 and a lower ventilation passage 108. The external wall part 108A of the room duct between the ventilation passage 108 and the space in the room comprises openings. Furthermore, sheet 114A with openings forms the separation wall between the air supply passage and the ventilation passage. As illustrated, air in the air supply passage could only flow through openings of separation wall 114A into the lower ventilation passage. Furthermore, the room duct only supplies air through the room via the external wall part forming the boundary between the ventilation passage and the space in the room.

In an alternative embodiment of the room duct, not shown, the air supply passage is locate below the ventilation passage and a sheet with openings forms a separation wall between the air supply passage and the ventilation passage and a flow of fresh air supplied to and forced through the air supply passage could only flow through the openings of the separation wall. The ventilation passage is in fluid communication with the attic above the room by one or more openings through the ceiling. The ventilation passage is in fluid communication with the space in the room by an opening structure configured to evenly distribute a maximum predefined flow of air over the room along the entire length of the room duct. The flow of fresh air generated by the fresh air supply fan through the air supply passage ensures that the flow of fresh air is evenly supplied to and distributed over the entire length of the ventilation passage. In this way, at low flow rates which might be below the flow rate of fresh air generated by the fresh air fan, fresh air could be evenly distributed of the room without use of any mechanical structure to control the flow rate from the attic to the ventilation passage.

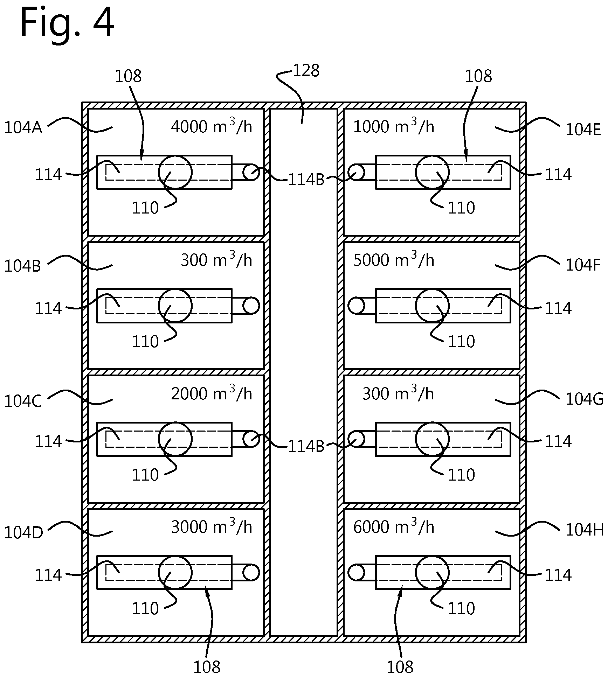

Fig. 4 illustrates a top plan view of a livestock production building illustrating containment rooms 104A -104H provided with a room duct. Furthermore, the amount of air drawn by an exhaust fan from each room is given. Assume the fresh air flow of 1000m³/h flows through duct 114B to each air supply passage 114 of the room duct. In that case, room 104A draws 3000m³/h air from the attic via inlet 110. Room 104B pushes 700m³/h of air into the attic via inlet 110. The air pushed into the attic flows subsequently to the inlet of a room duct of another room which exhaust flow drawn from the room by an exhaust fan is higher than the fresh air flow generated by the air supply fan and supplied to the air supply passage of the room duct.

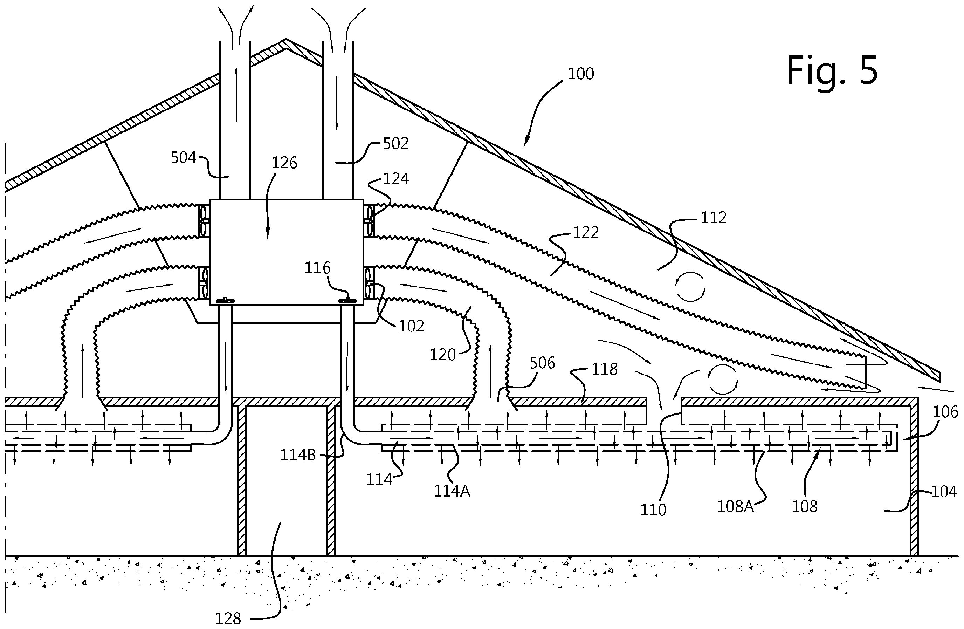

Fig. 5 is a sectional view of a second embodiment of a livestock production building. In this embodiment the ventilation system further comprises a heating unit 126 to heat up the air supplied to the air supply passage of the room ducts 106. The heating unit 126 in this embodiment is a heat exchanger configured to transfer heat from an exhaust flow generated by one or more exhaust fans 102 to one or more fresh air flows generated by one or more air supply fans 116. The fresh air is taken from outside by duct 502. The exhaust air flow is extracted from the room via opening 506 in the ceiling 118 of the room 104. Via duct 120 the extracted exhaust air is supplied to the heat transfer unit and subsequently exhausted via duct 504 to the outside.

Optionally, duct 122 is provided to supply heated fresh air to on an opening of the building through which fresh air is flowing into the attic due to the negative pressure in the building. The heated airflow and fresh air flowing into the building are mixed before the air is sucked out of the attic through inlet 110 of the room duct 106.

The room duct according to the present disclosure has the advantage that all heated air supplied to the air supply duct will be used in the building. If the exhaust flow from a room generated by the exhaust fan is smaller than the air flow generated by the air supply fan to the air supply passage, not all heated air will flow into the room. The remaining part of the heated air will flow through the inlet 110 of the room duct to the attic and via the attic to another room which exhaust fan rate is larger than the fresh air supply flow. The remaining part of the heated air flowing through the ventilation passage 108 and inlet 110 is still fresh air.

Instead of a heat exchanger any other unit to heat a flow of air could be used.

In case in a room the exhaust flow rate comparable with the fresh air supply rate of the air generated by the fresh air supply fan, the velocity of the air flow flowing though inlet 110 will be very small. As a consequence, there will be natural ventilation in the area of the inlet wherein heated air will flow upwards from the ventilation passage through the inlet into the attic and relative cold air will fall down through the inlet into the ventilation passage. This results in a variation of the temperature of the air supplied by the room duct to the room whereby undesired temperature variations arise in the room. To prevent this natural ventilation in the inlet, the inlet could be provided with an arrangement to control the flow opening, for example a slide or valve, which reduces the flow opening when the velocity of the flow thought the opening falls below a predetermined low value and increase the opening when the flow rises above a predetermined high value.

It should further be noticed, that in case a fresh air supply fan supplies air to more than one room duct, there might be means to stop the air flow to an air supply passage of a room duct. This is advantageous in case one of the rooms has to be heated and another room has to be cooled at the same time.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the scope of the appended claims.

## Claims

1. A ventilation system (100) for a livestock production building; the ventilation system comprising:
- an exhaust fan (102) which draws air from a room (104);
- a room duct (106) for supplying fresh air into the room; the room duct comprises a ventilation passage (108) and an inlet (110) disposed between afresh air supply (112) and the ventilation passage, the room duct comprises an exterior wall (108A) with openings for distributing fresh air from the ventilation passage over the room;
**characterized in that,**
the room duct further comprises an air supply passage (114) parallel to the ventilation passage, the ventilation system further comprises an air supply fan (116) for generating a flow rate of fresh air through the air supply passage, a separation wall (114A) with openings for passing air from the air supply passage (114) to the ventilation passage (108) separates the ventilation passage (108) from the air supply passage (114).

2. The ventilation system according to claim 1 wherein the air supply passage is disposed in or next to the ventilation passage.

3. The ventilation system according to any of the claims 1 - 2, wherein in a low ventilation mode the exhaust fan generates an exhaust flow rate from the room which is smaller than the flow rate generated by the air supply fan to the room.

4. The ventilation system according to any of the claims 1 - 3, wherein in a high ventilation mode the exhaust fan generates an exhaust flow rate from the room which is larger than the flow rate generated by the air supply fan to the room.

5. The ventilation system according to any of the claims 1 - 4, wherein the system further comprises a heating unit (126) configured to heat the air flow generated by the air supply fan to the air supply passage.

6. The ventilation system according to any of the claims 1 - 5, wherein the ventilation system further comprises a valve to control the opening of the inlet disposed between the fresh air supply and the ventilation passage.

7. The ventilation system according to any of the claims 1 - 6, wherein the livestock production building comprises at least two rooms, the ventilation system is configured to control the exhaust flow rate of each room independently and each room comprises a room duct.

8. The ventilation system according to any of the claims 1 - 7, wherein the ventilation passage and the air supply passage are formed by plastic film tubes.

9. Method for supplying fresh air into a room, the method comprises:
- providing a room duct comprising a ventilation passage and an inlet disposed between a fresh air supply and the ventilation passage and an air supply passage, the room duct comprises an exterior wall with openings for distributing fresh air from the ventilation passage over the room, the air supply passage extends parallel to the ventilation passage and a separation wall comprising openings for passing a fresh air flow from the air supply passage to the ventilation passage separates the ventilation passage from the air supply passage
- drawing air from the room with an exhaust fan;
- generating with an additional fan the fresh air flow through the air supply passage of the room duct,
**characterized in that**
in a low ventilation mode the air flow drawn from the room is smaller than the fresh air flow and a part of the fresh air flow flows through the inlet of the ventilation passage to the fresh air supply.

10. The method according to claim 9, wherein in a high ventilation mode the air flow drawn from the room is larger than the fresh air flow and the fresh air flow passes subsequently openings of the separation wall and openings of the exterior wall.

11. The method according to any of the claims 9 - 10, wherein the method further comprises: heating in a heating unit the fresh air flow to the air supply passage.

12. The method according to any of the claims 9 - 11, wherein the ventilation passage and the air supply passage are plastic film tubes.

## Patentansprüche

1. Belüftungssystem (100) für ein Tierproduktionsgebäude; das Belüftungssystem aufweisend:
- einen Abluftventilator (102), der Luft aus einem Raum (104) abzieht;
- einen Raumkanal (106) zum Zuführen von Frischluft in den Raum; wobei der Raumkanal einen Belüftungsdurchgang (108) und einen Einlass (110) aufweist, der zwischen einer Frischluftzufuhr (112) und dem Belüftungsdurchgang angeordnet ist, wobei der Raumkanal eine Außenwand (108A) mit Öffnungen zum Verteilen von Frischluft aus dem Belüftungsdurchgang über den Raum hinweg aufweist;
**dadurch gekennzeichnet, dass**
der Raumkanal ferner einen Luftzufuhrdurchgang (114) parallel zum Belüftungsdurchgang aufweist, das Belüftungssystem ferner einen Luftzufuhrventilator (116) zum Erzeugen einer Durchstrommenge von Frischluft durch den Luftzufuhrdurchgang aufweist, eine Trennwand (114A) mit Öffnungen zum Durchleiten von Luft vom Luftzufuhrdurchgang (114) zum Belüftungsdurchgang (108) den Belüftungszugang (108) vom Luftzufuhrdurchgang (114) trennt.

2. Belüftungssystem nach Anspruch 1, wobei der Luftzufuhrzugang in oder neben dem Belüftungszugang angeordnet ist.

3. Belüftungssystem nach einem der Ansprüche 1 - 2, wobei der Abluftventilator in einem niedrigen Belüftungsmodus eine Abluftdurchstrommenge aus dem Raum erzeugt, die geringer als die Durchstrommenge ist, die durch den Luftzufuhrventilator zum Raum erzeugt ist.

4. Belüftungssystem nach einem der Ansprüche 1 - 3, wobei der Abluftventilator in einem hohen Belüftungsmodus eine Abluftdurchstrommenge aus dem Raum erzeugt, die größer als die Durchstrommenge ist, die durch den Luftzufuhrventilator zum Raum erzeugt ist.

5. Belüftungssystem nach einem der Ansprüche 1 - 4, wobei das System ferner eine Heizeinheit (126) aufweist, die zum Erhitzen des Luftstroms konfiguriert ist, der durch den Luftzufuhrventilator zum Luftzufuhrdurchgang erzeugt ist.

6. Belüftungssystem nach einem der Ansprüche 1 - 5, wobei das Belüftungssystem ferner ein Ventil zum Steuern der Öffnung des Einlasses aufweist, der zwischen der Frischluftzufuhr und dem Belüftungsdurchgang angeordnet ist.

7. Belüftungssystem nach einem der Ansprüche 1 - 6, wobei das Tierproduktionsgebäude mindestens zwei Räume aufweist, wobei das Belüftungssystem zum unabhängigen Steuern der Abluftdurchstrommenge von jedem Raum konfiguriert ist und jeder Raum einen Raumkanal aufweist.

8. Belüftungssystem nach einem der Ansprüche 1 - 7, wobei der Belüftungsdurchgang und der Luftzufuhrdurchgang durch Kunststofffolienröhren ausgebildet sind.

9. Verfahren zum Zuführen von Frischluft in einen Raum, wobei das Verfahren aufweist:
- Vorsehen eines Raumkanals, der einen Belüftungsdurchgang und einen Einlass, welcher zwischen einer Frischluftzufuhr und dem Belüftungsdurchgang angeordnet ist, und einen Luftzufuhrdurchgang aufweist, wobei der Raumkanal eine Außenwand mit Öffnungen zum Verteilen von Frischluft aus dem Belüftungsdurchgang über den Raum hinweg aufweist, wobei der Luftzufuhrdurchgang parallel zum Belüftungsdurchgang verläuft und eine Trennwand, die Öffnungen zum Durchleiten eines Frischluftstroms vom Luftzufuhrdurchgang zum Belüftungsdurchgang aufweist, den Belüftungszugang vom Luftzufuhrdurchgang trennt;
- Abziehen von Luft aus dem Raum mit einem Abluftventilator;
- Erzeugen, mit einem zusätzlichen Ventilator, des Frischluftstroms durch den Luftzufuhrdurchgang des Raumkanals,
**dadurch gekennzeichnet, dass**
in einem niedrigen Belüftungsmodus der Luftstrom, der aus dem Raum abgezogen wird, geringer als der Frischluftstrom ist, und ein Teil des Frischluftstroms durch den Einlass des Belüftungsdurchgangs zur Frischluftzufuhr strömt.

10. Verfahren nach Anspruch 9, wobei in einem hohen Belüftungsmodus der Luftstrom, der aus dem Raum gezogen wird, größer als der Frischluftstrom ist, und der Frischluftstrom anschließend Öffnungen der Trennwand und Öffnungen der Außenwand durchläuft.

11. Verfahren nach einem der Ansprüche 9 - 10, wobei das Verfahren ferner aufweist: Erhitzen, in einer Heizeinheit, des Frischluftstroms zum Luftzufuhrdurchgang.

12. Verfahren nach einem der Ansprüche 9 - 11, wobei der Belüftungszugang und der Luftzufuhrzugang Kunststofffolienröhren sind.

## Revendications

1. Système de ventilation (100) pour un bâtiment d'élevage de bétail, le système de ventilation comprenant :
- un ventilateur d'évacuation (102) qui aspire l'air à partir d'une salle (104) ;
- un conduit (106) de salle pour alimenter la salle en air frais, le conduit de salle comprenant un passage de ventilation (108) et une entrée (110) disposée entre une alimentation (112) en air frais et le passage de ventilation, le conduit de salle comprenant une paroi extérieure (108A) ayant des ouvertures pour distribuer l'air frais provenant du passage de ventilation au-dessus de la salle,
**caractérisé en ce que** le conduit de salle comprend en outre une conduite (114) d'alimentation en air parallèle au passage de ventilation, le système de ventilation comprend en outre un ventilateur (116) de pulsion d'air pour produire un débit d'air frais à travers la conduite d'alimentation en air, une paroi de séparation (114A) ayant des ouvertures pour faire passer l'air de la conduite (114) d'alimentation en air au passage de ventilation (108) sépare le passage de ventilation (108) de la conduite (114) d'alimentation en air.

2. Système de ventilation selon la revendication 1, dans lequel la conduite d'alimentation en air est disposée dans ou à côté du passage de ventilation.

3. Système de ventilation selon l'une quelconque des revendications 1 - 2, dans lequel, dans un mode de ventilation faible, le ventilateur d'évacuation produit un débit d'évacuation de la salle qui est inférieur au débit produit par le ventilateur de pulsion d'air dans la salle.

4. Système de ventilation selon l'une quelconque des revendications 1 - 3, dans lequel, dans un mode de ventilation forte, le ventilateur d'évacuation produit un débit d'évacuation de la salle qui est supérieur au débit produit par le ventilateur de pulsion d'air dans la salle.

5. Système de ventilation selon l'une quelconque des revendications 1 - 4, dans lequel le système comprend en outre une unité de chauffage (126) configurée pour chauffer la circulation d'air produite par le ventilateur de pulsion d'air vers la conduite d'alimentation en air.

6. Système de ventilation selon l'une quelconque des revendications 1 - 5, dans lequel le système de ventilation comprend en outre une vanne pour commander l'ouverture de l'entrée disposée entre l'alimentation en air frais et le passage de ventilation.

7. Système de ventilation selon l'une quelconque des revendications 1 - 6, dans lequel le bâtiment d'élevage de bétail comprend au moins deux salles, le système de ventilation est configuré pour commander indépendamment le débit d'évacuation de chaque salle et chaque salle comprend son conduit de salle.

8. Système de ventilation selon l'une quelconque des revendications 1 - 7, dans lequel le passage de ventilation et la conduite d'alimentation en air sont constituées de tubes en film plastique.

9. Procédé d'alimentation d'une salle en air frais, le procédé comprenant les opérations consistant à :
- faire appel à un conduit de salle comprenant un passage de ventilation, une entrée disposée entre l'alimentation en air frais et le passage de ventilation et une conduite d'alimentation en air,
dans lequel le conduit de salle comprend une paroi extérieure ayant des ouvertures pour distribuer l'air frais provenant du passage de ventilation au-dessus de la salle, la conduite d'alimentation en air s'étend parallèlement au passage de ventilation et une paroi de séparation comprenant des ouvertures pour faire passer la circulation d'air frais de la conduite d'alimentation en air au passage de ventilation sépare le passage de ventilation de la conduite d'alimentation en air ;
- aspirer de l'air de la salle à l'aide d'un ventilateur d'évacuation ;
- produire, à l'aide d'un ventilateur supplémentaire, la circulation d'air frais passant par la conduite d'alimentation en air du conduit de salle, **caractérisé en ce que**, dans un mode de ventilation faible, le débit d'air aspiré de la salle est inférieur à la circulation d'air frais et une partie de la circulation d'air frais s'écoule par l'entrée du passage de ventilation vers l'alimentation en air frais.

10. Procédé selon la revendication 9, dans lequel, dans un mode de ventilation forte, le débit d'air aspiré de la salle est supérieur à la circulation d'air frais et la circulation d'air frais passe ultérieurement par les ouvertures de la paroi de séparation et par les ouvertures de la paroi extérieure.

11. Procédé selon l'une quelconque des revendications 9 - 10, dans lequel le procédé comprend en outre l'opération consistant à chauffer dans une unité de chauffage la circulation d'air frais vers la conduite d'alimentation en air.

12. Procédé selon l'une quelconque des revendications 9 - 11, dans lequel le passage de ventilation et la conduite d'alimentation en air sont des tubes en film plastique.
